# EUROPEAN PATENT SPECIFICATION

(11) **EP 3 083 446 B1**
(45) Date of publication and mention of the grant of the patent: **17.06.2020**
(21) Application number: 14815172.3
(22) Date of filing: 02.12.2014
(51) Int. Cl.: B65D 25/38, B65D 83/14

(54) **CONTAINER FOR DISPOSABLE SPRAY GUN COMPONENTS**
BEHÄLTER FÜR WEGWERFBARE SPRITZPISTOLENKOMPONENTEN
RÉCIPIENT POUR COMPOSANTS JETABLES DE PISTOLET DE PULVÉRISATION

(30) Priority: 16.12.2013 US 201361916593 P
(43) Date of publication of application: 26.10.2016
(73) Proprietor: 3M Innovative Properties Company, St. Paul, MN 55133-3427 (US)
(72) Inventor: PITERA, Dominic M., Saint Paul, Minnesota 55133-3427 (US); JOSEPH, Stephen C.P., Saint Paul, Minnesota 55133-3427 (US)
(74) Representative: Vossius & Partner Patentanwälte Rechtsanwälte mbB
(86) International application number: PCT/US2014/068063
(87) International publication number: WO 2015/094634

(56) References cited:
- EP-A1- 0 334 603
- WO-A1-99/05047
- BE-A6- 1 014 362
- US-A- 1 408 752
- US-A- 2 730 231
- US-A- 5 285 900
- US-A- 5 803 295

## Description

### Background

Containers and dispensers for consumable and disposable part are generally known. There is a need for containers and dispensers with improved aesthetic appeal and usability.

US 5,285,900 A discloses a stackable storage container for storing articles, comprising a box having a bottom and four walls extending upwardly from the bottom to a free edge, the bottom and the walls defining a storage space for articles and the free edge defining an opening for access to the storage space. The stackable storage container comprises a cover having a top and a downwardly depending lip for engaging the side walls adjacent the free edge for releasably retaining the cover on the box, one of the walls having a cut-out therein, and guide means bordering the cut-out for receiving and retaining a movable panel therein for selectably opening and closing the cut-out. The panel is approximately the same size as the cut-out, the guide means is arranged so that the panel when inserted into the guide means is at an angle to the wall having the cut-out such that the upper region of the panel extends further from the wall than the lower region of the panel.

### Summary of the Invention

The container according to the invention is defined in independent claim 1, while preferred embodiments are defined in the dependent claims.

The words "preferred" and "preferably" refer to embodiments described herein that may afford certain benefits, under certain circumstances. However, other embodiments may also be preferred, under the same or other circumstances.

As used herein and in the appended claims, the singular forms "a," "an," and "the" include plural referents unless the context clearly dictates otherwise. Thus, for example, reference to "a" or "the" component may include one or more of the components and equivalents thereof known to those skilled in the art. Further, the term "and/or" means one or all of the listed elements or a combination of any two or more of the listed elements.

It is noted that the terms "comprises" and variations thereof do not have a limiting meaning where these terms appear in the accompanying description. Moreover, "a," "an," "the," "at least one," and "one or more" are used interchangeably herein.

Relative terms such as left, right, forward, rearward, top, bottom, side, upper, lower, horizontal, vertical, and the like may be used herein and, if so, are from the perspective observed in the particular figure. These terms are used only to simplify the description, however, and not to limit the scope of the invention in any way.

Reference throughout this specification to "one embodiment," "certain embodiments," "one or more embodiments" or "an embodiment" means that a particular feature, structure, material, or characteristic described in connection with the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention. Furthermore, the particular features, structures, materials, or characteristics may be combined in any suitable manner in one or more embodiments.

The above summary is not intended to describe each embodiment or every implementation of the reservoirs and associated vent assemblies described herein. Rather, a more complete understanding of the invention will become apparent and appreciated by reference to the following Description of Illustrative Embodiments and claims in view of the accompanying figures of the drawing.

These and other aspects of the invention will be apparent from the detailed description below. In no event, however, should the above summaries be construed as limitations on the claimed subject matter, which subject matter is defined solely by the attached claims, as may be amended during prosecution.

### Brief Description of the Drawings

Throughout the specification, reference is made to the appended drawings, where like reference numerals designate like elements, and wherein:
FIG. 1 depicts a perspective view of an exemplary container according to the present disclosure;
FIG. 2 depicts a perspective view of the container of FIG. 1 mounted on a work surface and comprising disposable spray gun components;
FIG. 3 depicts a front view of the container of FIG. 1;
FIG. 4 depicts a rear view of the container of FIG. 1;
FIG. 5 depicts an exploded perspective view of the container of FIG. 1, wherein a first decorative panel is shown removed from a storage volume;
FIG. 6 depicts an exploded perspective view of an exemplary container according to the present disclosure a container, wherein a first decorative panel is shown installed, and a second decorative panel is shown removed from the storage volume;
FIG. 7 depicts a perspective view of an exemplary container according to the present disclosure;
FIG. 8 depicts a perspective view of the container of FIG. 7 mounted on a work surface and comprising disposable spray gun components;
FIG. 9 depicts a front view of the container of FIG. 7;
FIG. 10 depicts a rear view of the container of FIG. 7;
FIG. 11 depicts an exploded perspective view of the container of FIG. 7, wherein a first decorative panel is shown removed from a storage volume;
FIG. 12 depicts an exploded perspective view of an exemplary container according to the present disclosure a container, wherein a first decorative panel is shown installed, and a second decorative panel is shown removed from the storage volume;
FIG. 13 depicts a top view of an exemplary container according to the present disclosure showing an exemplary storage volume;
FIG. 14 depicts exemplary disposable spray gun components according to the present disclosure; and
FIG. 15 depicts a perspective rear view of an exemplary container according to the present disclosure, wherein a projected container front surface area is shown.

### Detailed Description

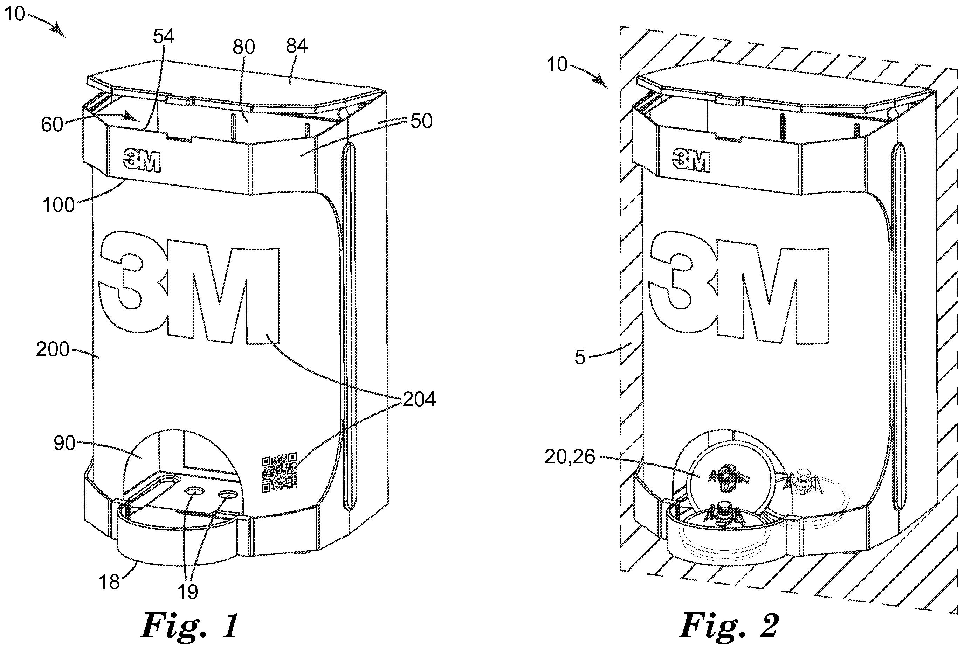

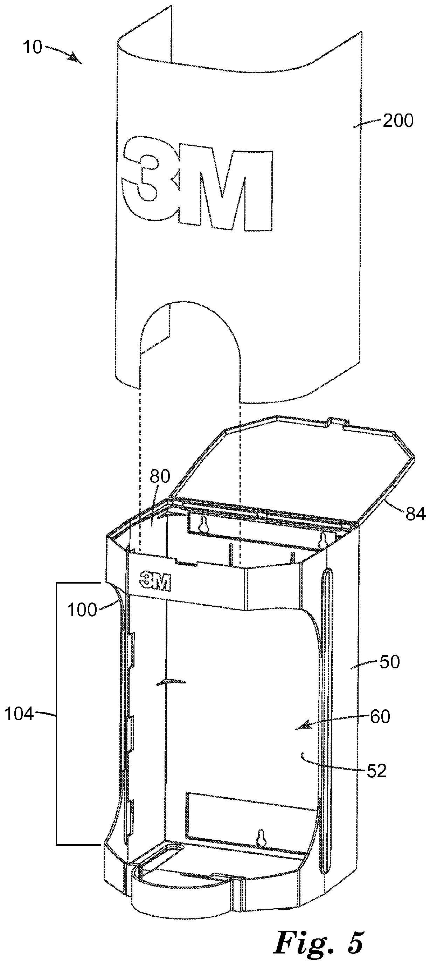

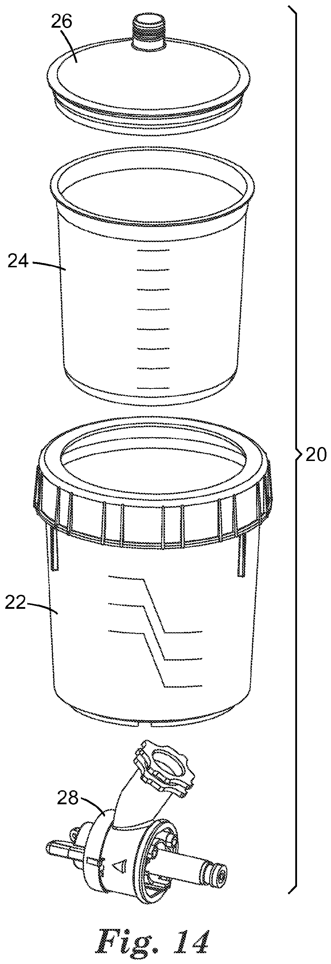

FIGS. 1-13 and 15 depict exemplary containers according to the present disclosure. As shown, a sidewall 50 encloses at least a portion of a storage volume 60. The storage volume 60 can be adapted to hold a plurality of disposable spray gun components 20, such as those depicted in FIG. 14. When configured as a dispenser, containers according to the present disclosure can allow a user to remove components from the storage volume 60 while protecting the contents of the storage volume 60 from dust and debris. Exemplary disposable spray gun components 20 may include components of the 3M brand PAINT PREPARATION SYSTEM™ or similar, such as lids 26, liners 24, cups 22, and collars (not shown), or spray nozzles 28, such as those provided with a 3M brand ACCUSPRAY™ system.

In one embodiment, the containers can be deployed in collision repair and/or paint shops. In such situations, it is generally important to keep disposable spray gun components 20 very clean prior to use. This is because dust and debris in such components can contaminate paint or other coating materials, potentially resulting in defects in the applied coating. Defects can necessitate costly rework, affecting the profitability and efficiency of the shop.

In a typical shop, disposable spray gun components 20 are stored in a mixing area where painters mix and prepare coatings for application in a spray booth, and often clean spray guns after use. These areas tend to be cluttered, and excess paint and solvent are inherently present Keeping disposable spray gun components 20 clean - yet easily accessible - in this environment can be challenging. Therefore, embodiments of the present disclosure are effective to keep contents of the storage volume 60 clean yet easily accessible.

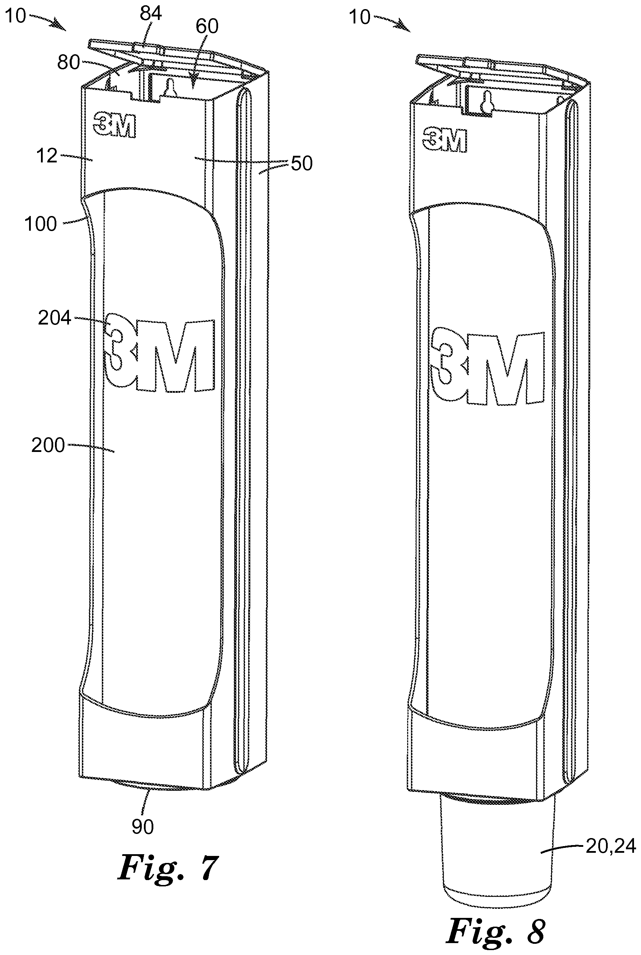

As shown, for example, in alternative embodiments in FIGS. 1 and 7, an exemplary container 10 may comprise a sidewall 50 that encloses at least a portion (typically a rear portion 52) of the storage volume 60. The sidewall 50 comprises an opening perimeter 100 that defines a front opening 104. The opening perimeter can be any shape, but may preferably be made to be visually pleasing when viewed from the front of the container. A first decorative panel 200 is positioned in the front opening 104 to enclose a front portion 54 of the storage volume 60. At an upper portion of the container 10, an optional ingress 80 is formed to permit the loading of disposable spray gun components 20 while the first decorative panel 200 is positioned in the front opening 104.

The sidewall may be constructed of any suitable material. For example, the sidewall may be constructed of injection molded polymer or bent metal. In one embodiment, the sidewall is injection molded from high impact polystyrene (HIPS). The first decorative panel may also be formed of any suitable material. For example, the first decorative panel may be constructed of flat or roll-form sheet good, including polymers and/or metals. In one embodiment, the first decorative panel is cut to size from roll-form polyethylene terephthalate (PET). The sidewall and/or the first decorative panel may be provided with antistatic properties, such as by films or coatings, to reduce dust adhesion, etc. Generally, the container components could be fabricated in any manner (and from any material) such that the first decorative panel and remaining surfaces define an enclosure.

In the embodiment shown, a lid portion 84 covers the ingress 80. As shown, the lid portion 84 is hingedly connected to the sidewall 50 at the container rear surface. However, any connection of lid portion 84 to sidewall 50 is envisioned (or lack of physical connection, such is in a lid portion that simply rests on top of the container), provided the lid portion 84 can selectively reveal and cover the ingress 80.

Although the container bottom surface 18 of the container of FIGS. 1-6 is generally shown solid in the appended drawings, it could be provided with apertures 19 (see, e.g., FIG. 1) small enough to prevent the disposable spray gun components from falling through, yet large enough to permit some dust and debris entering the storage volume to drop out the bottom, thereby reducing contamination within the storage volume.

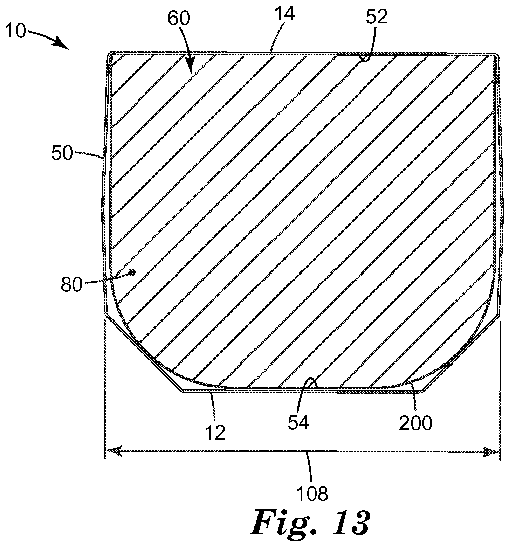

FIG. 13 depicts a container 10 as viewed from the direction of the top portion looking through the ingress 80 (e.g., of the container 10 of FIG. 1), such that the storage volume 60 can be more clearly seen and described. As shown, the storage volume 60 comprises a front portion 54 (proximate the first decorative panel 200 (and/or second decorative panel 201 in some embodiments) and a rear portion 52 proximate the sidewall 50 at the container rear surface 14. In the embodiment shown, the first decorative panel 200 has a curved profile that extends along the sidewall 50 around the container front surface 12 to close the front opening 104 (not shown in this view).

In other embodiments, disposable spray gun components 20 may be loaded into the storage volume 60 through the front opening 104 (e.g., prior to positioning the first decorative panel 200 over the front opening 104) of through an opening that serves dual purposes as an optional egress 90. In such embodiments, neither the lid portion 84 nor the ingress 80 may be necessary, and the sidewall 50 may simply extend to cover the top portion of the container 10.

In embodiments where an egress 90 is provided, disposable spray gun components 20 may be conveniently removed from the storage volume 60 through the egress 90. The egress 90 may be defined as an opening in the sidewall 50, an opening in the first decorative panel 200, or - as shown in the Figures - as an opening defined partially by the sidewall 50 and partially by the first decorative panel 200. The egress 90 may be sized to permit passage of only one disposable spray gun component at a time, such that the contents of the storage volume 60 are safely retained by the remaining portions of the first decorative panel 200 and sidewall 50.

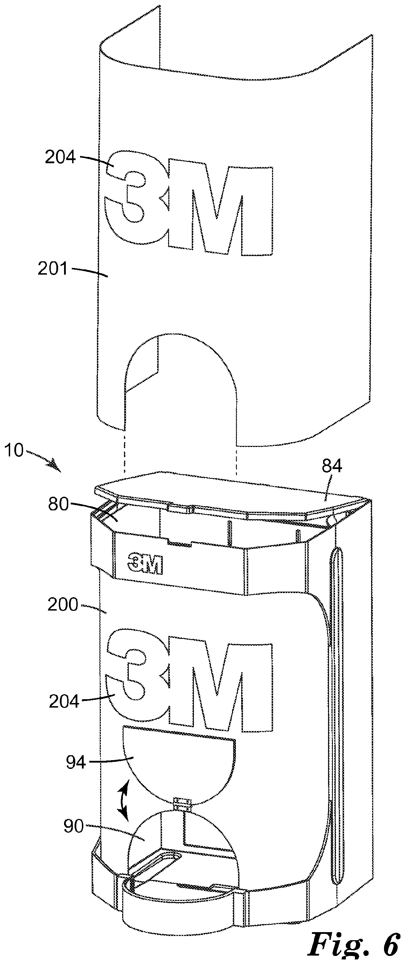

In some embodiments, a cover portion 94 is provided to at least partially occlude the egress 90, thereby reducing the chance of the storage volume 60 being contaminated (see, e.g., FIG. 6). As shown in FIG. 6 the cover portion 94 is hingedly connected to the first decorative panel 200. However, any connection of cover portion 94 to first decorative panel 200 or sidewall 50 is envisioned, provided the cover portion 94 can selectively reveal and cover the egress 90. In one embodiment, the cover portion 94 comprises a flexible curtain (or curtains) that hang to at least partially cover the egress 90, but are easily brushed or otherwise moved aside by a user while reaching in to remove a disposable spray gun component. In some embodiments, the cover portion 94 can be held in an open position and closed at the convenience of a user. For example, a user may wish to leave the cover portion 94 open for easy accessibility during the workday and close it afterwards to prevent dust infiltration. In one such embodiment, a cover portion 94 is hingedly or otherwise connected to the sidewall 50 proximate the egress 90 such that the cover portion 94 can open in a downward direction so that gravity can hold the cover portion 94 open. In some embodiments, regardless of the manner or direction of opening, the cover portion 94 is configured to be held in an open position at the discretion of the user. Holding in the open position may be facilitated by one or more latching members.

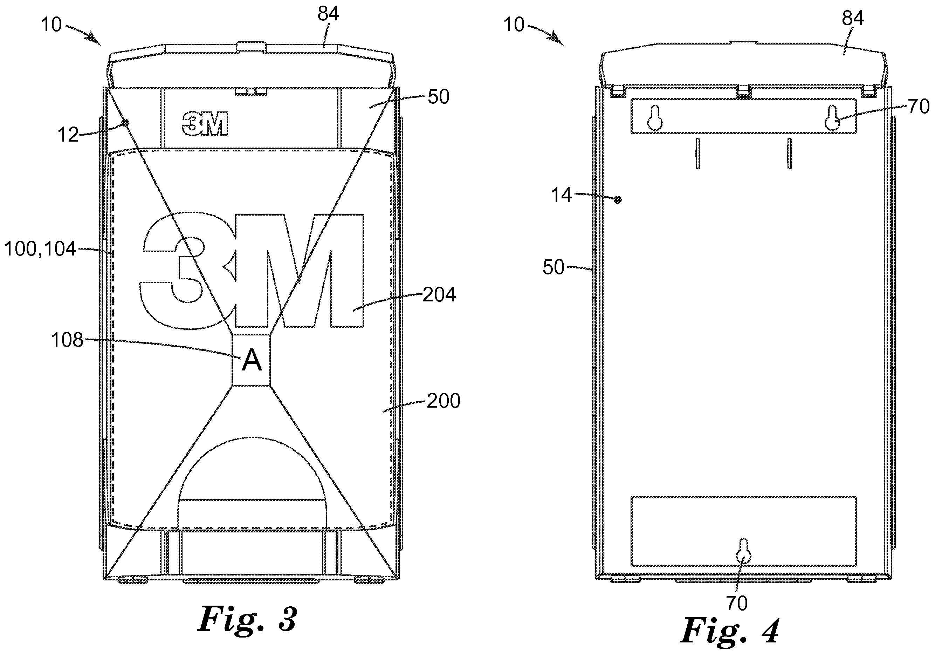

In some embodiments, the container 10 is mounted on a work surface 5. As shown in FIG. 2, the container 10 is mounted (e.g., hung) on a vertical work surface 5 via a hanging member 70 (not shown in FIG. 2). As shown in FIG. 4, a hanging member 70 can be provided on the sidewall 50 at a container rear surface 14. A hanging member 70 can comprise a slot or other feature for engaging a screw fasten to a work surface 5, or any other means of securing the container 10 to the work surface 5 (e.g., adhesives, magnets, ties, hooks, etc.). In some embodiments, the container 10 is simply rested a horizontal work surface 5 (e.g., a table or shelf).

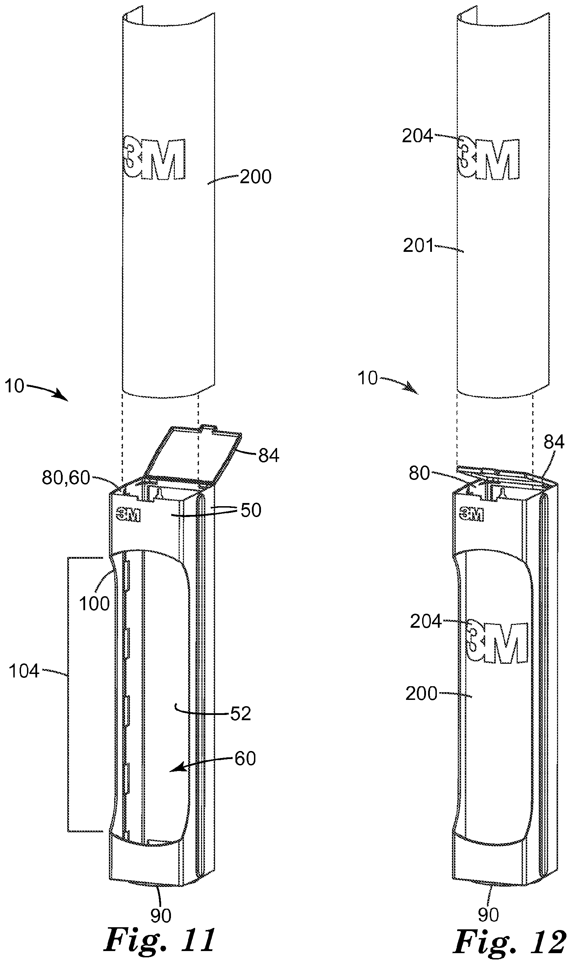

In some embodiments (see, e.g., FIGS 6 and 12), a second decorative panel 201 is provided proximate the first decorative panel 200. In such cases, the first decorative panel 200 or second decorative panel 201 may be removed prior to the other panel to reveal a clean panel. This can be a convenient way of refreshing the appearance of the container 10, the surface of which may have become contaminated with paint or other debris. By having more than one decorative panel, one can be removed while there are still contents within the storage volume 60, without fear of the contents falling out. In the alternative, a contaminated first decorative panel 200 may be removed (leaving the front opening 104 temporarily uncovered) and replaced with another.

In the depicted embodiments, the first decorative panel 200 comprises a curved profile. A first decorative panel 200 could be preformed in such a curved profile, or could be provided as a flexible sheet that can be deformed to take on the curved profile. In one embodiment, the first decorative panel 200 is provided as a substantially planar sheet that is deformed during assembly into the container 10 to take on a curved profile. In the embodiments shown, the first decorative panel 200 is installed through an ingress 80 while a lid portion 84 is open.

It should be understood that, wherever features of a first decorative panel 200 are described herein, such features may apply equally to a second decorative panel 201. It should further be understood that, while reference is made to a first decorative panel 200 and a second decorative panel 201, containers according to the present disclosure may comprise more than two decorative panels (e.g., three or more, etc.).

In one embodiment, the first decorative panel 200 comprises a transparent portion, or is entirely transparent, such that the contents of the storage volume 60 can be viewed through the first decorative panel 200. As used herein, the term "transparent" describes a panel whereby the unaided human eye can readily view objects within the storage volume 60 under ordinary lighting. Therefore, panels having a degree of opacity (i.e., less than optically clear), but still permitting the function described in the preceding sentence, may nevertheless be considered transparent.

In one embodiment, a first decorative panel 200 comprises visual indicia 204 relevant, for example, to the contents of the storage volume 60, the source (e.g., manufacturer) of the contents, the location of the container 10 (e.g., the shop in which it is located), or promotional information. For example, the first decorative panel 200 may comprise a Quick Response Code (or QR code) which, when scanned, directs a user to further relevant information as described above. Because the first decorative panel 200 is intended to be replaced periodically, the visual indicia 204 can be updated to remain current. The sidewall 50 can be provided without readily apparent visual indicia 204, such that containers using the same sidewall 50 can be placed in multiple locations with different first decorative panels, thereby providing an easy and economical means of customization for different users.

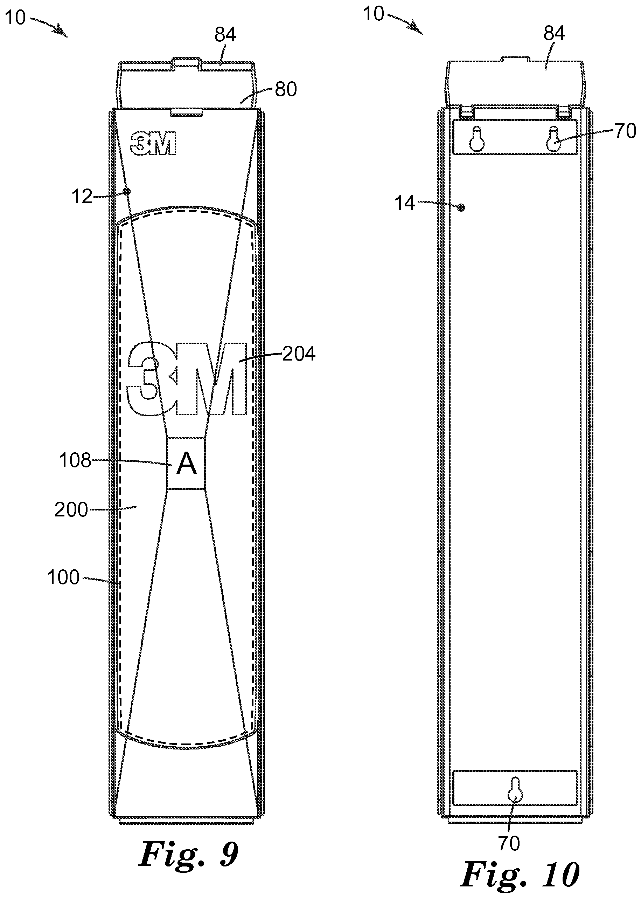

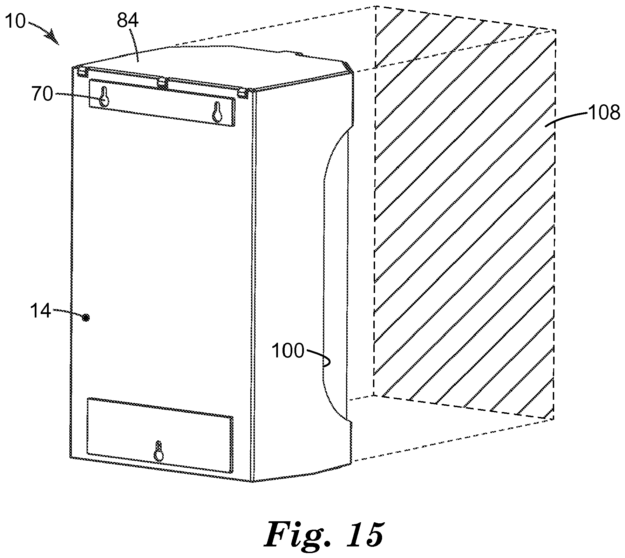

As shown the container front surface 12 comprises a container front surface area 108. This area is determined by the area projected by the container front surface 12, notwithstanding the particular shape or profile of the container front surface 12, as exemplified in FIG. 15. Said differently, the container front surface area 108 is the area viewed from the front direction, such as the area that is also marked with the letter "A" shown in FIGS. 3 and 9.

In some embodiments, the front opening 104 spans at least fifty percent (50%) of the container front surface area 108. In some embodiments, the front opening 104 spans at least seventy-five percent (75%) of the container front surface area 108. Due to the large relative area spanned by the front opening 104 in such embodiments, the first decorative panel 200 can predominate the front view of the container 10. Where the first decorative panel 200 comprises a transparent portion (or, preferably, is entirely transparent), the predominant size of the first decorative panel 200 permits the contents of the storage volume 60 to be easily viewed by a user. Thus, in such embodiments it can be easy to tell when the contents are running low or empty, or to readily view the cause of a jamb that is causing disposable spray gun components 20 not to drop to the egress 90 as intended. Whether the first decorative panel 200 is transparent or not, the predominant size can also permit increased space for visual indicia 204, as described above. In one embodiment, the front opening 104 spans a range from about fifty percent (50%) to about ninety-five percent (95%) of the container front surface area 108, including, e.g., 60%, 82%, and 88%. The predominant view of the first decorative panel 200 also permits a substantial portion of the container front surface 12 to be refreshed upon replacement of the first decorative panel 200, or revealing the second decorative panel 201.

Although the invention herein has been described with reference to particular embodiments, it is to be understood that these embodiments are merely illustrative of the principles and applications of the present invention. It is intended that the present invention includes modifications and variations that are within the scope of the appended claims.

## Claims

1. A container (10) for disposable spray gun components (20) comprising
a container front surface (12);
a container rear surface (14);
a sidewall (50) enclosing at least a rear portion (52) of a storage volume (60) and forming at least a portion of the container rear surface (14), the at least one sidewall (50) comprising an opening perimeter (100) proximate a front portion (54) of the storage volume (60) and defining a front opening (104);
a first decorative panel (200) removably positioned in the front opening (104) to substantially enclose the front portion (54) of the storage volume (60) and form at least a portion of the container front surface (12);
wherein the sidewall (50) comprises:
an ingress portion for loading disposable spray gun components (20) into the storage volume (60); and
an egress portion for dispensing disposable spray gun components (20) from the storage volume (60), and
wherein the first decorative panel (200) comprises a sheet that is deformed from a relaxed state to an installed state to be positioned in the front opening (104).

2. The container (10) of claim 1 wherein the sidewall (50) comprises a hanging member (70) for hanging the container (10) on a work surface (5).

3. The container (10) of claim 2 wherein the hanging member (70) is positioned on the container rear surface (14).

4. The container (10) of claim 3 comprising a lid portion (84) that is openable to reveal the ingress portion.

5. The container (10) of claim 4 wherein the lid portion (84) is hingedly connected to the sidewall (50).

6. The container (10) of any of claims 4-5 wherein the container (10) comprises a container top portion, wherein the lid portion (84) is position proximate the container top portion.

7. The container (10) of any of claims 4-6 wherein the first decorative panel (200) is removable from the container (10) when the lid portion (84) is opened to reveal the ingress portion.

8. The container (10) of claim 7 comprising a cover portion (94) that at least partially covers the egress portion, wherein the cover portion (94) is movable to fully reveal the egress portion.

9. The container (10) of claim 8 wherein the cover portion (94) is hingedly connected to the sidewall (50).

10. The container (10) of any of claims 8-9 wherein the cover portion (94) is positioned on the container front surface (12).

11. The container (10) of any of claims 8-10 wherein the first decorative panel (200) forms a portion of the egress portion.

12. The container (10) of any of claims 1-11 wherein the first decorative panel (200) is sufficiently transparent to permit viewing of contents of the storage volume (60).

13. The container (10) of any of claims 1-12 wherein the first decorative panel (200) comprises visual indicia (204) providing information about contents of the storage volume (60).

14. The container (10) of claim 13 wherein the visual indicia (204) comprises a QR code.

15. The container (10) of any of claims 1-14 wherein the sidewall (50) is opaque.

16. The container (10) of any of claims 1-15 comprising a second decorative panel (201) positioned adjacent to and behind the first decorative panel (200), wherein the first decorative panel (201) is removable from the container (10) to reveal the second decorative panel (201).

17. The container (10) of any of claims 1-16 wherein the first decorative panel (200) comprises a curved profile, such that the container front surface (12) comprises a convex portion when the first decorative panel (200) is positioned in the front opening (104).

18. The container (10) of any of claims 1-17 wherein the first decorative panel (200) is substantially planar in the relaxed state.

19. The container (10) of claim 18 wherein the first decorative panel (200) comprises a curved profile in the installed state.

20. The container (10) of any of the preceding claims wherein the container front surface (12) comprises a container front surface area (108), wherein the front opening (104) spans at least 50 percent of the container front surface area (108).

21. The container (10) of claim 20 wherein the front opening (104) spans at least 75 percent of the container front surface area (108).

22. The container (10) of any of the preceding claims further comprising one or more disposable spray gun components (20) selected from the group consisting of cups (22), liners (24), lids (26), spray nozzles (28), and combinations thereof.

## Patentansprüche

1. Behälter (10) für Einweg-Spritzpistolenkomponenten (20), aufweisend
eine Behältervorderseite (12);
eine Behälterrückseite (14);
eine Seitenwand (50), die mindestens einen hinteren Abschnitt (52) eines Speichervolumens (60) umschließt und mindestens einen Teil der Behälterrückseite (14) bildet, wobei die mindestens eine Seitenwand (50) einen Öffnungsumfang (100) nahe einem vorderen Abschnitt (54) des Speichervolumens (60) aufweist und eine vordere Öffnung (104) definiert;
eine erste dekorative Platte (200), die entfernbar in der vorderen Öffnung (104) positioniert ist, um den vorderen Abschnitt (54) des Speichervolumens (60) im Wesentlichen zu umschließen und mindestens einen Abschnitt der Behältervorderseite (12) zu bilden;
wobei die Seitenwand (50) aufweist:
einen Zugangsabschnitt zum Laden von Einweg-Spritzpistolenkomponenten (20) in das Speichervolumen (60); und
einen Ausgangsabschnitt zum Abgeben von Einweg-Spritzpistolenkomponenten (20) aus dem Speichervolumen (60), und
wobei die erste dekorative Platte (200) ein Paneel aufweist, das von einem entspannten Zustand in einen eingebauten Zustand verformt wird, um in der vorderen Öffnung (104) positioniert zu werden.

2. Behälter (10) nach Anspruch 1, wobei die Seitenwand (50) ein Aufhängelement (70) zum Aufhängen des Behälters (10) an einer Arbeitsfläche (5) aufweist.

3. Behälter (10) nach Anspruch 2, wobei das Aufhängelement (70) an der Behälterrückseite (14) positioniert ist.

4. Behälter (10) nach Anspruch 3, aufweisend einen Deckelabschnitt (84), der geöffnet werden kann, um den Zugangsabschnitt freizulegen.

5. Behälter (10) nach Anspruch 4, wobei der Deckelabschnitt (84) gelenkig mit der Seitenwand (50) verbunden ist.

6. Behälter (10) nach einem der Ansprüche 4 bis 5, wobei der Behälter (10) einen oberen Behälterabschnitt aufweist, wobei der Deckelabschnitt (84) benachbart zum oberen Behälterabschnitt angeordnet ist.

7. Behälter (10) nach einem der Ansprüche 4 bis 6, wobei die erste dekorative Platte (200) von dem Behälter (10) entfernbar ist, wenn der Deckelabschnitt (84) geöffnet ist, um den Zugangsabschnitt freizulegen.

8. Behälter (10) nach Anspruch 7, aufweisend einen Abdeckabschnitt (94), der den Ausgangsabschnitt mindestens teilweise abdeckt, wobei der Abdeckabschnitt (94) beweglich ist, um den Ausgangsabschnitt vollständig freizulegen.

9. Behälter (10) nach Anspruch 8, wobei der Abdeckabschnitt (94) gelenkig mit der Seitenwand (50) verbunden ist.

10. Behälter (10) nach einem der Ansprüche 8 bis 9, wobei der Abdeckabschnitt (94) an der Behältervorderseite (12) angeordnet ist.

11. Behälter (10) nach einem der Ansprüche 8 bis 10, wobei die erste dekorative Platte (200) einen Abschnitt des Ausgangsabschnitts bildet.

12. Behälter (10) nach einem der Ansprüche 1 bis 11, wobei die erste dekorative Platte (200) ausreichend transparent ist, um das Betrachten von Inhalten des Speichervolumens (60) zu ermöglichen.

13. Behälter (10) nach einem der Ansprüche 1 bis 12, wobei die erste dekorative Platte (200) visuelle Markierungen (204) aufweist, die Informationen über Inhalte des Speichervolumens (60) bereitstellen.

14. Behälter (10) nach Anspruch 13, wobei die visuellen Markierungen (204) einen QR-Code aufweisen.

15. Behälter (10) nach einem der Ansprüche 1 bis 14, wobei die Seitenwand (50) opak ist.

16. Behälter (10) nach einem der Ansprüche 1 bis 15, aufweisend eine zweite dekorative Platte (201), die angrenzend an und hinter der ersten dekorativen Platte (200) angeordnet ist, wobei die erste dekorative Platte (200) von dem Behälter (10) abnehmbar ist, um die zweite dekorative Platte (201) freizulegen.

17. Behälter (10) nach einem der Ansprüche 1 bis 16, wobei die erste dekorative Platte (200) ein gekrümmtes Profil aufweist, so dass die Behältervorderseite (12) einen konvexen Abschnitt aufweist, wenn die erste dekorative Platte (200) in der vorderen Öffnung (104) angeordnet ist.

18. Behälter (10) nach einem der Ansprüche 1 bis 17, wobei die erste dekorative Platte (200) im entspannten Zustand im Wesentlichen flach ist.

19. Behälter (10) nach Anspruch 18, wobei die erste dekorative Platte (200) im eingebauten Zustand ein gekrümmtes Profil aufweist.

20. Behälter (10) nach einem der vorstehenden Ansprüche, wobei die Behältervorderseite (12) einen Behältervorderseitenbereich (108) aufweist, wobei die vordere Öffnung (104) mindestens 50 % der Behältervorderseitenfläche (108) überspannt.

21. Behälter (10) nach Anspruch 20, wobei die vordere Öffnung (104) mindestens 75 % der Behältervorderseitenfläche (108) überspannt.

22. Behälter (10) nach einem der vorstehenden Ansprüche, ferner aufweisend eine oder mehrere Einweg-Spritzpistolenkomponenten (20), ausgewählt aus der Gruppe bestehend aus Bechern (22), Linern (24), Deckeln (26), Spritzdüsen (28) und Kombinationen davon.

## Revendications

1. Récipient (10) pour des composants jetables de pistolet de pulvérisation (20) comprenant
une surface avant de récipient (12) ;
une surface arrière de récipient (14) ;
une paroi latérale (50) entourant au moins une partie arrière (52) d'un volume de stockage (60) et formant au moins une partie de la surface arrière du récipient (14), la au moins une paroi latérale (50) comprenant un périmètre d'ouverture (100) à proximité d'une partie avant (54) du volume de stockage (60) et définissant une ouverture avant (104) ;
un premier panneau décoratif (200) positionné de manière amovible dans l'ouverture avant (104) pour enfermer sensiblement la partie avant (54) du volume de stockage (60) et former au moins une partie de la surface avant du récipient (12) ;
dans lequel la paroi latérale (50) comprend :
une partie d'entrée pour charger des composants jetables de pistolet de pulvérisation (20) dans le volume de stockage (60) ; et
une partie de sortie pour distribuer des composants jetables de pistolet de pulvérisation (20) à partir du volume de stockage (60), et
dans lequel le premier panneau décoratif (200) comprend une feuille qui est déformée d'un état relaxé à un état installé à positionner dans l'ouverture avant (104).

2. Récipient (10) selon la revendication 1, dans lequel la paroi latérale (50) comprend un élément de suspension (70) pour suspendre le récipient (10) sur une surface de travail (5).

3. Récipient (10) selon la revendication 2, dans lequel l'élément de suspension (70) est positionné sur la surface arrière du récipient (14).

4. Récipient (10) selon la revendication 3, comprenant une partie de couvercle (84) qui peut être ouverte pour révéler la partie d'entrée.

5. Récipient (10) selon la revendication 4, dans lequel la partie de couvercle (84) est reliée de manière articulée à la paroi latérale (50).

6. Récipient (10) selon l'une quelconque des revendications 4 à 5, dans lequel le récipient (10) comprend une partie supérieure de récipient, dans lequel la partie de couvercle (84) est positionnée à proximité de la partie supérieure de récipient.

7. Récipient (10) selon l'une quelconque des revendications 4 à 6, dans lequel le premier panneau décoratif (200) peut être retiré du récipient (10) lorsque la partie de couvercle (84) est ouverte pour révéler la partie d'entrée.

8. Récipient (10) selon la revendication 7, comprenant une partie de couverture (94) qui recouvre au moins partiellement la partie de sortie, dans lequel la partie de couverture (94) est mobile pour révéler complètement la partie de sortie.

9. Récipient (10) selon la revendication 8, dans lequel la partie de couverture (94) est reliée de manière articulée à la paroi latérale (50).

10. Récipient (10) selon l'une quelconque des revendications 8 à 9, dans lequel la partie de couverture (94) est positionnée sur la surface avant du récipient (12).

11. Récipient (10) selon l'une quelconque des revendications 8 à 10, dans lequel le premier panneau décoratif (200) forme une partie de la partie de sortie.

12. Récipient (10) selon l'une quelconque des revendications 1 à 11, dans lequel le premier panneau décoratif (200) est suffisamment transparent pour permettre la visualisation du contenu du volume de stockage (60).

13. Récipient (10) selon l'une quelconque des revendications 1 à 12, dans lequel le premier panneau décoratif (200) comprend un indice visuel (204) fournissant des informations concernant le contenu du volume de stockage (60).

14. Récipient (10) selon la revendication 13, dans lequel l'indice visuel (204) comprend un code QR.

15. Récipient (10) selon l'une quelconque des revendications 1 à 14, dans lequel la paroi latérale (50) est opaque.

16. Récipient (10) selon l'une quelconque des revendications 1 à 15, comprenant un deuxième panneau décoratif (201) positionné adjacent et derrière le premier panneau décoratif (200), le premier panneau décoratif (200) étant amovible du récipient (10) pour révéler le deuxième panneau décoratif (201).

17. Récipient (10) selon l'une quelconque des revendications 1 à 16, dans lequel le premier panneau décoratif (200) comprend un profil incurvé, de sorte que la surface avant du récipient (12) comprend une partie convexe lorsque le premier panneau décoratif (200) est positionné dans l'ouverture avant (104).

18. Récipient (10) selon l'une quelconque des revendications 1 à 17, dans lequel le premier panneau décoratif (200) est sensiblement plan à l'état relaxé.

19. Récipient (10) selon la revendication 18, dans lequel le premier panneau décoratif (200) comprend un profil incurvé à l'état installé.

20. Récipient (10) selon l'une quelconque des revendications précédentes, dans lequel la surface avant du récipient (12) comprend une zone de surface avant de récipient (108), dans lequel l'ouverture avant (104) s'étend sur au moins 50 pour cent de la zone de surface avant du récipient (108).

21. Récipient (10) selon la revendication 20, dans lequel l'ouverture avant (104) s'étend sur au moins 75 pour cent de la zone de surface avant du récipient (108).

22. Récipient (10) selon l'une quelconque des revendications précédentes, comprenant en outre un ou plusieurs composants jetables de pistolet de pulvérisation (20) choisis dans le groupe constitué de godets (22), de revêtements (24), de couvercles (26), de buses de pulvérisation (28), et de combinaisons de ceux-ci.
